# EUROPÄISCHE PATENTSCHRIFT

(11) **EP 2 909 052 B1**
(45) Veröffentlichungstag und Bekanntmachung des Hinweises auf die Patenterteilung: **24.08.2016**
(21) Anmeldenummer: 13776486.6
(22) Anmeldetag: 14.10.2013
(51) Int. Cl.: B60K 6/48, B60K 6/547, B60K 6/40, F16D 25/0638, F16D 25/10

(54) **DOPPELKUPPLUNGSANORDNUNG FÜR EIN DOPPELKUPPLUNGSGETRIEBE**
DUAL-CLUTCH ASSEMBLY FOR A DUAL-CLUTCH TRANSMISSION
DISPOSITIF À DOUBLE EMBRAYAGE DESTINÉ À UNE BOÎTE DE VITESSES À DOUBLE EMBRAYAGE

(30) Priorität: 19.10.2012 DE 102012021074; 29.08.2013 DE 102013109366
(43) Veröffentlichungstag der Anmeldung: 26.08.2015
(73) Patentinhaber: GETRAG Getriebe- und Zahnradfabrik Hermann Hagenmeyer GmbH & Cie KG, 74199 Untergruppenbach (DE)
(72) Erfinder: KRAMM, Torsten, 74360 Ilsfeld (DE); GREMPLINI, Hansi, 74379 Ingersheim (DE); WOLF, Thomas, 71640 Ludwigsburg (DE)
(74) Vertreter: Witte, Weller & Partner Patentanwälte mbB
(86) Internationale Anmeldenummer: PCT/EP2013/071384
(87) Internationale Veröffentlichungsnummer: WO 2014/060331

(56) Entgegenhaltungen:
- EP-A2- 1 698 799
- EP-A2- 2 685 122
- WO-A1-2008/033701
- DE-A1-102007 027 121
- DE-A1-102007 050 235
- US-A1- 2008 236 983
- US-A1- 2013 153 355

## Beschreibung

Die vorliegende Erfindung betrifft eine Doppelkupplungsanordnung für ein Doppelkupplungsgetriebe, mit einer Eingangswelle, einer ersten Reibkupplung, einer zweiten Reibkupplung, einer ersten Ausgangswelle, einer zweiten Ausgangswelle, einer ersten Kolben/Zylinderanordnung und einer zweiten Kolben/Zylinderanordnung; wobei Eingangsglieder der Reibkupplungen mit der Eingangswelle verbunden sind; wobei Ausgangsglieder der Reibkupplungen jeweils mit einer der beiden Ausgangswellen verbunden sind; wobei die Reibkupplungen jeweils mittels einer der Kolben/Zylinderanordnungen betätigbar sind; und wobei jede Kolben/Zylinderanordnung einen Kolben aufweist, der axial verschieblich in einem dazugehörigen Zylinder gelagert ist.

Eine derartige Doppelkupplungsanordnung ist aus der Schrift DE102008055681A1 bekannt.

Derartige Doppelkupplungsanordnungen sind auch aus EP2685122, EP1698799, US2008/236983 und US2013/153355 bekannt.

Doppelkupplungsgetriebe weisen eine Doppelkupplungsanordnung sowie zwei Teilgetriebe auf. Die Teilgetriebe sind in der Regel in Vorgelegebauweise ausgeführt. Durch überschneidende Betätigung der zwei Kupplungen der Doppelkupplungsanordnung kann ein Gangwechsel ohne Zugkraftunterbrechung durchgeführt werden. Diese Art von Doppelkupplungsgetriebe eignet sich für Kraftfahrzeuge, insbesondere für Personenkraftwagen.

Bei den Doppelkupplungsanordnungen werden heutzutage in der Regel fluidisch betriebene Reibkupplungen verwendet, beispielsweise nass laufende Lamellenkupplungen. So zeigt die Schrift DE102008055681A1 eine Doppelkupplungsanordnung, bei der den beiden radial ineinander verschachtelten Reibkupplungen jeweils eine Kolben/Zylinderanordnung zugeordnet ist. Eine erste Reibkupplung ist radial innen und eine zweite Reibkupplung ist radial außen angeordnet. Die Zufuhr von Fluid zu den Kolben/Zylinderanordnungen erfolgt über Drehdurchführungen zwischen einer gehäusefesten Nabe und dem drehbar auf der Nabe gelagerten Nabenmantel. Die Kolben/Zylinderanordnungen sind nabenmantelfest. Jede Kolben/Zylinderanordnung weist einen Kolben und einen Zylinder auf, wobei der Kolben axial verschieblich im dazugehörigen Zylinder gelagert ist und Kolben und Zylinder einen Kolbenraum druckdicht umschließen. Jeder Kolbenraum ist mit Fluid druckbeaufschlagbar. Bei Zufuhr von Fluid zu einem Kolbenraum wird dessen Kolben axial gegen Lamellenpakete der zugeordneten Reibkupplung gepresst und die Reibkupplung infolge Reibschluss geschlossen. Der Druck im Kolbenraum beträgt 10 bar und mehr, die axiale Anpresskraft der Kolben auf die Lamellenpakete beträgt 5kN und mehr.

Nachteilig bei dieser Art von Doppelkupplungsanordnung ist die Tatsache, dass die hohen Anpresskräfte der Kolben auf die Lamellenpakete zu hohen Reaktionskräften auf die Zylinder führen, wodurch die Zylinder entsprechend massiv ausgeführt sind, was Bauraum benötigt und Materialkosten verursacht.

Als Lösung zeigt die Schrift DE102006010113A1 eine Doppelkupplungsanordnung mit nabenfesten Kolben/Zylinderanordnungen mit Kolben, die axial verschieblich im dazugehörigen Zylinder gelagert sind. Auf der vom Kolben abgewandten Seite stützt sich der Zylinder über einen Sicherungsring der gehäusefesten Nabe ab, und so die Reaktionskräfte bei minimalem Bauraum und geringen Materialkosten aufzunehmen.

Nun hat sich bei dieser Art von Doppelkupplungsanordnung als nachteilig erwiesen, dass Dichtungsmaterial des Zylinders am Sicherungsring der gehäusefesten Nabe scheuern und somit verschleißen kann.

Es ist daher Aufgabe der vorliegenden Erfindung, diese Doppelkupplungsanordnungen für ein Doppelkupplungsgetriebe zu verbessern.

Die Aufgabe wird erfindungsgemäß durch eine Doppelkupplungsanordnung für ein Doppelkupplungsgetriebe gelöst, mit einer Eingangswelle, einer ersten Reibkupplung, einer zweiten Reibkupplung, einer ersten Ausgangswelle, einer zweiten Ausgangswelle, einer ersten Kolben/Zylinderanordnung und einer zweiten Kolben/Zylinderanordnung; wobei Eingangsglieder der Reibkupplungen mit der Eingangswelle verbunden sind; wobei Ausgangsglieder der Reibkupplungen jeweils mit einer der beiden Ausgangswellen verbunden sind; wobei die Reibkupplungen jeweils mittels einer der Kolben/Zylinderanordnungen betätigbar sind; wobei jede Kolben/Zylinderanordnung einen Kolben aufweist, der axial verschieblich in Bezug auf einen dazugehörigen Zylinder gelagert ist; wobei sich jeder Zylinder auf der vom Kolben abgewandten Seite in einem radial außen liegenden Bereich auf eine Stütze abstützt, insbesondere in axialer Richtung; und wobei jeder Zylinder auf der vom Kolben abgewandten Seite in einem radial innen liegenden Bereich von der Stütze beabstandet ist.

Im Unterschied zur Schrift DE102006010113A1, wo sich die Zylinder der Kolben/Zylinderanordnungen in radial innen liegenden Bereichen der Zylinder auf Sicherungsringe abstützen, erfolgt bei der erfinderischen Doppelkupplungsanordnung eine solche Abstützung in radial außen liegenden Bereichen der Zylinder. Dies ist von Vorteil, denn während die Zylinder im Stand der Technik einseitige Hebel bilden, bei denen die auf die Zylinder wirkenden Reaktionskräfte in radial innen liegenden Bereichen der Zylinder mit Drehmomenten in die Sicherungsringe geleitet werden, bilden die erfindungsgemäßen Zylinder keine solchen einseitigen Hebel, wodurch auch keine Drehmomente auf die Stütze wirken. Dementsprechend können die Zylinder selber mit minimalem Materialbedarf ausgeführt werden, da die Reaktionskräfte drehmomentenfrei in die Stützen geleitet werden.

Die Stütze ist vorzugsweise als Ringelement ausgebildet, das auf eine Nabe aufschiebbar ist.

Der radial außen liegende Bereich ist vorzugsweise radial außerhalb eines Anlageabschnittes des Zylinders angeordnet, der den Kolben in einer Grundstellung axial abstützt.

Erfindungsgemäss ist jede Stütze in ihrer axialen Ausrichtung vom dazugehörigen Zylinder zumindest bereichsweise weg gewölbt.

Dies ist von Vorteil, denn die Stütze wird durch die Wölbung zur Aufnahme der Reaktionskräfte versteift. Somit erfolgt in den Kolben/Zylinderanordnungen eine Funktionstrennung, bei der der Zylinder für die axiale Lagerung des Kolben ausgelegt wird, während die Stütze gezielt zur Aufnahme der Reaktionskraft ausgelegt wird. Durch diese Funktionstrennung werden der benötigte Bauraum minimal und die Materialkosten gering gehalten.

Ferner ist es bevorzugt, dass sich jede Stütze in einem radial innen liegenden Bereich auf einen Sicherungsring abstützt, insbesondere in axialer Richtung.

Somit wird die Reaktionskraft nicht wie in der Schrift DE102006010113A1 gelehrt vom Zylinder direkt in den Sicherungsring geleitet, sondern die Reaktionskraft fließt in radial außen liegenden Bereichen vom Zylinder in die Stütze und in radial innen liegenden Bereichen von der Stütze in den Sicherungsring. Dadurch dass die Reaktionskraft in die intermediäre Stütze geleitet wird, kann der Zylinder für die axiale Lagerung des Kolbens ausgelegt werden, während die Stütze gezielt zur Aufnahme der Reaktionskräfte ausgelegt wird. Durch diese Funktionstrennung werden der benötigte Bauraum minimal und die Materialkosten gering gehalten.

Gemäß einer weiteren bevorzugten Ausführungsform ist jeder Zylinder bereichsweise mit Dichtungsmaterial versehen, um einen von einem Kolben und dem dazugehörigen Zylinder gebildeten Kolbenraum druckdicht zu umschließen; und dass das Dichtungsmaterial des Zylinders von der Stütze beabstandet ist.

Dies hat den Vorteil, dass Dichtungsmaterial des Zylinders nicht an der Stütze scheuern und somit verschleißen kann.

Die Aufgabe wird somit vollkommen gelöst.

Die vorstehend genannten und die nachstehend noch zu erläuternden Merkmale sind nicht nur in der jeweils angegebenen Kombination, sondern auch in anderen Kombinationen oder in Alleinstellung verwendbar, ohne den Rahmen der vorliegenden Erfindung zu verlassen.

Die Erfindung wird in den Figuren beispielhaft dargestellt und in der Beschreibung der Figuren näher erläutert. Es zeigen:
- Fig. 1: eine erste Ausführungsform einer Doppelkupplungsanordnung;
- Fig. 2: ein vergrößerter Ausschnitt von Fig. 1;
- Fig. 3: eine zweite Ausführungsform einer Doppelkupplungsanordnung;
- Fig. 4: ein vergrößerter Ausschnitt von Fig. 3;

- Fig. 5: eine dritte Ausführungsform einer Doppelkupplungsanordnung; und
- Fig. 6: ein vergrößerter Ausschnitt von Fig. 5.

In der nachfolgenden Beschreibung der Figuren werden ähnliche Merkmale mit den gleichen Bezugszeichen versehen. Sollten gravierende Unterschiede zwischen einzelnen Merkmalen vorhanden sein, wird explizit hingewiesen werden.

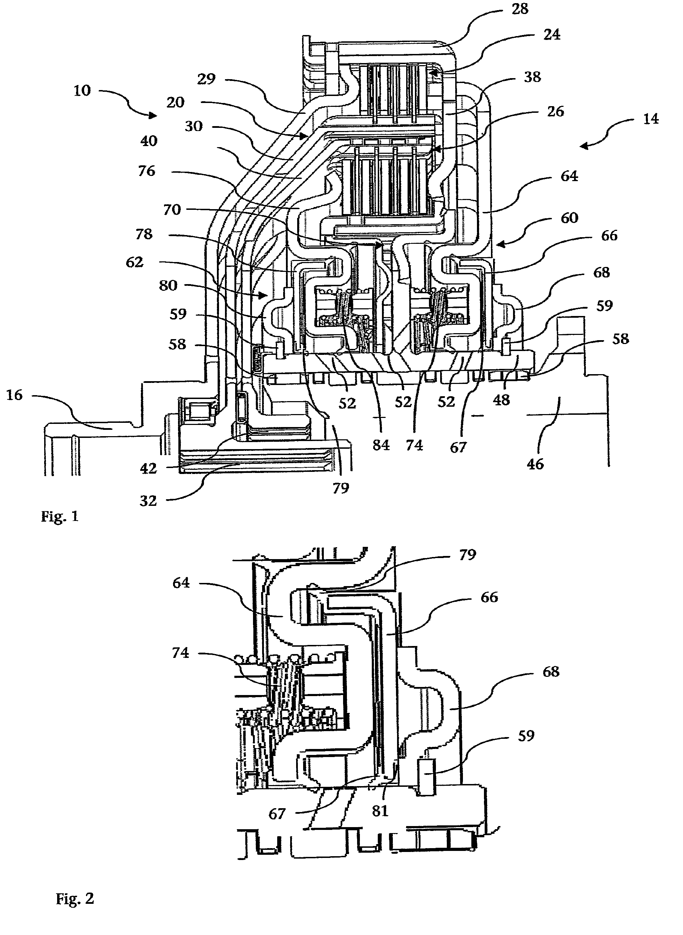

Die Fig. 1 bis 6 zeigen einen Antriebsstrang 10 mit einem nicht dargestellten Antriebsmotor wie zum Beispiel ein Verbrennungsmotor. Der Antriebsstrang 10 weist ferner ein Doppelkupplungsgetriebe 14 auf, dessen Eingangswelle 16 mit einer Kurbelwelle des Antriebsmotors verbunden ist. Das Doppelkupplungsgetriebe 14 weist eine ebenfalls nicht dargestellte Abtriebswelle auf, die in an sich bekannter Weise mit Antriebsrädern des Kraftfahrzeugs verbunden werden kann.

Das Doppelkupplungsgetriebe 14 weist eine Doppelkupplungsanordnung 20 auf, die in einem nicht dargestellten Gehäuse aufgenommen ist.

Die Doppelkupplungsanordnung 20 beinhaltet eine erste Reibkupplung 24 und eine zweite Reibkupplung 26. Die zwei Reibkupplungen 24, 26 sind radial ineinander verschachtelt angeordnet, wobei die erste Reibkupplung 24 radial außen liegt. Im Folgenden werden die Relativbegriffe radial innen und radial außen bezüglich der zentralen Symmetrieachse der Doppelkupplungsanordnung 20 verwendet. Diese zentrale Symmetrieachse entspricht beispielsweise der Achse der Eingangswelle 16.

Die erste Reibkupplung 24 weist ein erstes Eingangsglied 28 auf, das an die Eingangswelle 16 gekoppelt ist. Dazu ist das erste Eingangsglied 28 drehfest mit einer Mitnehmerscheibe 29 verbunden. Die Mitnehmerscheibe 29, die sich im Wesentlichen in radialer Richtung erstreckt, weist in axialer Richtung einen Mitnehmerring mit einer Innenverzahnung auf. Mit Hilfe der Innenverzahnung kann die Mitnehmerscheibe 29 an die Eingangswelle 16 koppeln, die dazu eine entsprechende Außenverzahnung aufweist.

Das erste Eingangsglied 28 erstreckt sich nach Art eines Korbes axial. Die zwei Reibkupplungen 24, 26 sind radial innerhalb des ersten Eingangsglieds 28 angeordnet.

Die erste Reibkupplung 24 weist ferner ein erstes Ausgangsglied 30 auf. Das erste Ausgangsglied 30 ist mit einer ersten Ausgangswelle 32 der Doppelkupplungsanordnung 20 verbunden. Die Ausgangswelle 32 ist als Vollwelle ausgebildet und ist mit einem ersten Teilgetriebe des Doppelkupplungsgetriebes 14 verbunden. Das erste Ausgangsglied 30 ist ebenfalls nach der Art eines Korbs ausgebildet und erstreckt sich radial innerhalb des ersten Eingangsglieds 28, wobei die erste Reibkupplung 24 dazwischen aufgenommen ist.

Die zweite Reibkupplung 26 weist ein zweites Eingangsglied 38 auf, das an die Eingangswelle 16 gekoppelt ist. Das zweite Eingangsglied 38 ist drehfest mit dem ersten Eingangsglied 28 verbunden, beispielsweise durch eine Schweißverbindung. Die zweite Reibkupplung 26 weist ferner ein zweites Ausgangsglied 40 auf. Das zweite Ausgangsglied ist ebenfalls nach Art eines Korbes ausgebildet und erstreckt sich radial innerhalb des ersten Ausgangsglieds 30. Das zweite Ausgangsglied 40 ist mit einer zweiten Ausgangswelle 42 verbunden, die als Hohlwelle konzentrisch zu der ersten Ausgangswelle 32 angeordnet ist. Die zweite Ausgangswelle 42 ist mit einem zweiten Teilgetriebe des Doppelkupplungsgetriebes 14 verbunden. Das erste Eingangsglied 28 inklusive der Mitnehmerscheibe 29, das erste Ausgangsglied 30 und das zweite Ausgangsglied 40 erstrecken sich, wie oben erwähnt, nach der Art von Körben ausgehend von dem Bereich der Eingangswelle 16 in Richtung hin zu den Teilgetrieben bzw. zur Abtriebswelle. Zum anderen weist die Doppelkupplungsanordnung 20 eine gehäusefeste Nabe 46 auf, die sich in axialer Richtung von dem Bereich der Teilgetriebe in Richtung hin zu dem Bereich der Eingangswelle 16 erstreckt. Die Nabe 46 weist im Bereich der Doppelkupplungsanordnung 20 eine im Wesentlichen zylindrische Form auf. Die gehäusefeste Nabe 46 ist dabei koaxial zu den beiden Ausgangswellen 32, 42 angeordnet und umgibt diese hier.

Zwischen einer Stirnseite der gehäusefesten Nabe 46 und radialen Abschnitten der Ausgangsglieder 30, 40 und einem radialen Abschnitt der Mitnehmerscheibe 29 sind hier nicht näher bezeichnete Axiallager vorgesehen. Diese Axiallager sind in radialer Richtung mit einem drehbar zur Nabe 46 gelagerten Nabenmantel 48 ausgerichtet.

Der Nabenmantel 48 ist im Bereich der Doppelkupplungsanordnung 14 zylindrisch ausgebildet und koaxial zu den Ausgangswellen 32, 42 angeordnet.

Der Nabenmantel 48 kann eine Verzahnung an seinem der Abtriebswelle gegenüberliegenden Ende aufweisen. Diese Verzahnung kann mit einer entsprechenden Verzahnung einer hier nicht dargestellten Hydraulikpumpe kämmen, um Fluide, die zum Betätigen und/oder Schmieren der Doppelkupplungsanordnung 14 benötigt werden, durch einzelne Öffnung 52 im Nabenmantel 48 zu führen. Die Öffnungen 52, von denen in der Fig. 1 bis 6 drei gezeigt sind, können zum Beispiel gebohrt oder gestanzt werden. Die Öffnungen 52 stehen fluidmäßig mit einem zentralen Kanal und umlaufend vorgesehenen Nuten in der Nabe 46 in Verbindung. Das Fluid wird durch die Nabe 46 in die Doppelkupplungsanordnung 14 durch die Öffnungen 52 geleitet.

Mit Hilfe zweier Radiallager 58 stützt sich die Doppelkupplungsanordnung 14 im Wesentlichen an der Nabe 46 ab. So dienen die Radiallager 58 zur Lagerung der Eingangsglieder 28, 38. Auf diese Weise können eine Vielzahl der Elemente der Doppelkupplungsanordnung 20 rotierend um die Nabe 46 gehalten werden. Obgleich das Radiallager 58 im Wesentlichen Radialkräfte aufnimmt, kann es auch zur Aufnahme von Axialkräften ausgelegt sein. Die Radiallager 58 sind abgedichtet, wobei in einem Raum zwischen den Abdichtungen die Öffnungen 52 angeordnet sind. Das erste Eingangsglied 28 ist an seinem der Eingangswelle 16 abgewandten Seite hier ebenfalls mit dem Nabenmantel 48 verbunden.

Zum Betätigen der beiden Reibkupplungen 24, 26 sind eine erste Kolben/Zylinderanordnung 60 und eine zweite Kolben/Zylinderanordnung 62 vorgesehen. Die Kolben/Zylinderanordnungen 60, 62 sind auf sich gegenüberliegenden Seiten bei einem gleichen Radius (relativ zur gemeinsamen Drehachse des Gesamtsystems) angeordnet.

Die erste Kolben/Zylinderanordnung 60 weist einen ersten Kolben 64 auf, der in axialer Richtung in dem ersten Zylinder 66 verschieblich gelagert ist. Ein hierdurch gebildeter Kolbenraum ist über eine der Öffnungen 52 im Nabenmantel 48 mit dem zentralen Kanal innerhalb der gehäusefesten Nabe 46 verbunden.

Eine Außenseite des ersten Kolbens 64 erstreckt sich radial nach außen und weist axiale Abschnitte auf. Ein radial außen liegender Axialabschnitt des Kolbens 64 ist dazu ausgelegt, die erste Reibkupplung 24 axial mit einer axialen Anpresskraft zu beaufschlagen, um die Reibkupplung 24 zu schließen.

Der erste Kolben 64 dreht sich mit dem ersten und dem zweiten Eingangsglied 28, 38 mit. Der erste Kolben 64 dreht sich auch mit dem nabenmantelfesten Zylinder 66 mit.

Der obere Axialabschnitt des ersten Kolbens 64, der an ein Lamellenpaket der ersten Reibkupplung 24 anstoßen kann, erstreckt sich durch eine hier nicht näher gezeigte Öffnung in einem Radialabschnitt des zweiten Eingangsglieds 38 hindurch.

Auf einer der ersten Kolben/Zylinderanordnung 60 gegenüberliegenden Seite ist ein T-förmiges Drehglied 70 mit einem inneren Kanal zur Versorgung mit Fluid vorgesehen. Zwischen dem ersten Kolben 64 und dem Drehglied 70 ist eine erste Federanordnung 74 vorgesehen, um den ersten Kolben 64 in eine geöffnete Stellung vorzuspannen. Die erste Federanordnung 74 stützt sich dazu an einem Radialsteg des Drehglieds 70 ab und drückt den ersten Kolben 64 in axialer Richtung von dem Radialabschnitt weg, in Fig. 1, 3 und 5 in Richtung der Teilgetriebe. Zum Betätigen der ersten Reibkupplung 24 wird der ersten Kolben/Zylinderanordnung 60 Hydraulikfluid zugeführt, so dass der erste Kolben 64 in die entgegengesetzte Richtung bewegt wird und folglich eine axiale Anpresskraft auf das Lamellenpaket der ersten Reibkupplung 24 ausübt.

Die zweite Kolben/Zylinderanordnung 62 ist in entsprechender Weise, vorzugsweise aus gleichen Bauteilen, etwa spiegelbildlich hierzu aufgebaut. Die erste und die zweite Kolben/Zylinderanordnung 60, 62 können folglich mit ähnlichen oder identischen Bauteilen realisiert werden, insbesondere mit gleichem Durchgangsöffnungsradius, so dass sich eine hohe Modularität und eine geringe Vielfalt ergibt.

Die zweite Kolben/Zylinderanordnung 62 weist demzufolge einen zweiten Zylinder 78 auf, der drehfest mit dem Nabenmantel 46 verbunden ist, und zwar im Wesentlichen benachbart zu dem zweiten Ausgangsglied 40.

Die zweite Kolben/Zylinderanordnung 82 weist ferner einen zweiten Kolben 76 auf. Ein radialer Abschnitt des zweiten Kolbens 76 liegt an einem Lamellenpaket der zweiten, radial innen liegenden Reibkupplung 26 an. Die zweite Kolben/Zylinderanordnung 62 kann folglich eine zweite axiale Anpresskraft auf die zweite Reibkupplung 26 ausüben, wobei die zweite axiale Anpresskraft entgegengesetzt zu der ersten Axialkraft ausgerichtet ist.

Zwischen einem weiteren Radialabschnitt des Drehglieds 70 und dem zweiten Kolben 78 der zweiten Kolben/Zylinderanordnung 62 ist eine zweite Federanordnung 84 vorgesehen, die den zweiten Kolben 76 in Fig. 1, 3 und 5 in Richtung der Eingangswelle 16 vorspannt.

Der Kolbenraum der zweiten Kolben/Zylinderanordnung 62 ist über die Öffnung 52 im Nabenmantel 48 mit dem zentralen Kanal in der Nabe 46 verbunden. Es versteht sich, dass eine hier nicht näher dargestellte Hydraulikschaltung auch Kanäle aufweist, über die den Reibkupplungen 24, 26 Kühlfluid zugeführt werden kann. Das Kühlfluid wird dabei über den zentralen Kanal in der gehäusefesten Nabe 46 einem Raum im Bereich des Drehglieds 70 und den Radialkanälen im Drehglied 70 und den Reibkupplungen 24, 26 zugeführt. Es versteht sich, dass in den Eingangs- und Ausgangsgliedern 38, 30, 40 jeweils geeignete Radialöffnungen vorgesehen sind, um für eine geeignete Beströmung der Lamellenpakete zu sorgen.

Jeder Zylinder 66, 78 stützt sich auf der vom Kolben 64, 76 abgewandten Seite in einem radial außen liegenden Bereich auf eine Stütze 68, 80 ab, während sich jeder Zylinder 66, 78 auf der vom Kolben 64, 76 abgewandten Seite in einem radial innen liegenden Bereich von der Stütze 68, 80 beabstandet ist. Die Stütze 68, 80 ist vorzugsweise aus Metallblech von mehreren mm Dicke gefertigt. Die Stütze 68, 80 erstreckt sich also von einem radial innen liegenden Bereich in einem radial außen liegenden Bereich. Bezüglich des Nabenmantels 48 weist der radial innen liegende Bereich vorzugsweise eine radiale Ausdehnung von 5 mm bis 2 cm auf. Und der radial außen liegende Bereich weist bezüglich des Nabenmantels 48 vorzugsweise eine radiale Ausdehnung von 5 cm bis 12 cm auf. Wie in Fig. 2, 4 und 6 im Detail dargestellt, weist ein Abstand 81 zwischen Kolben 64, 76 und Stütze 68, 80 im radial innen liegenden Bereich vorzugsweise eine Größenordnung von 0,05 mm bis 0,5 mm auf. Bei Kenntnis der vorliegenden Erfindung kann der Fachmann natürlich auch größere radiale Ausdehnungen des radial innen liegenden Bereichs von 3 cm oder 5 cm sowie größere radiale Ausdehnungen des radial außen liegenden Bereichs von 20 cm oder 25 cm realisieren. Auch kann der Fachmann größere Abstände von 1 mm oder 5 mm realisieren. Solche größeren radialen Ausdehnungen oder größeren Abständen benötigte jedoch mehr Bauraum.

Erfindungsgemäss (siehe Fig. 1, 3 und 5) ist jede Stütze 68, 80 in ihrer axialen Ausrichtung vom dazugehörigen Zylinder 66, 76 zumindest bereichsweise weg gewölbt. Vorzugsweise ist die Stütze 68, 80 in einem mittleren Bereich vom dazugehörigen Zylinder 66, 76 axial weg gewölbt, während die Stütze 68, 80 im radial innen liegenden Bereich und im radial außen liegenden Bereich radial ausgerichtet ist.

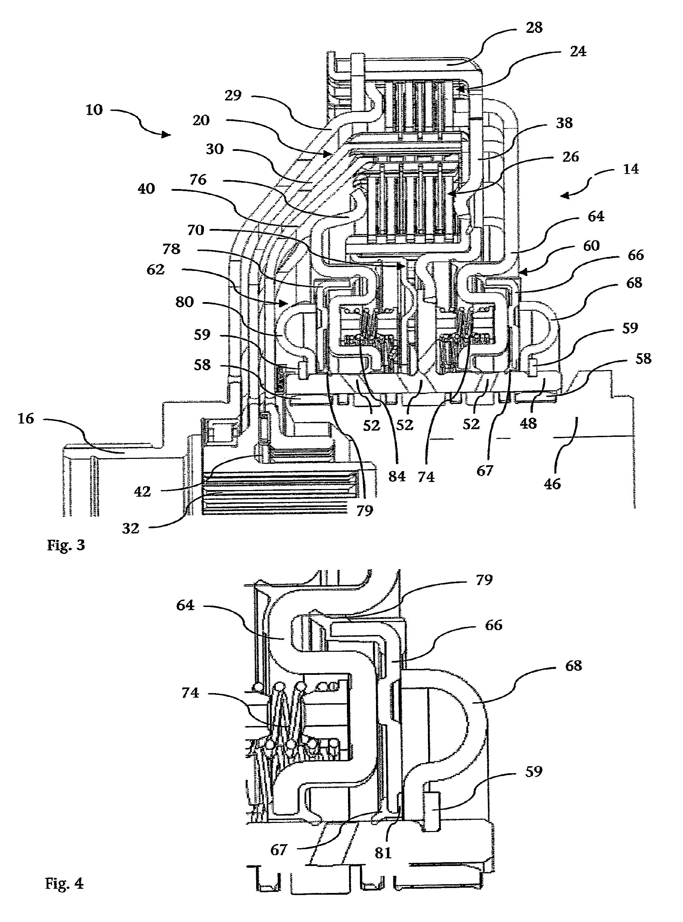

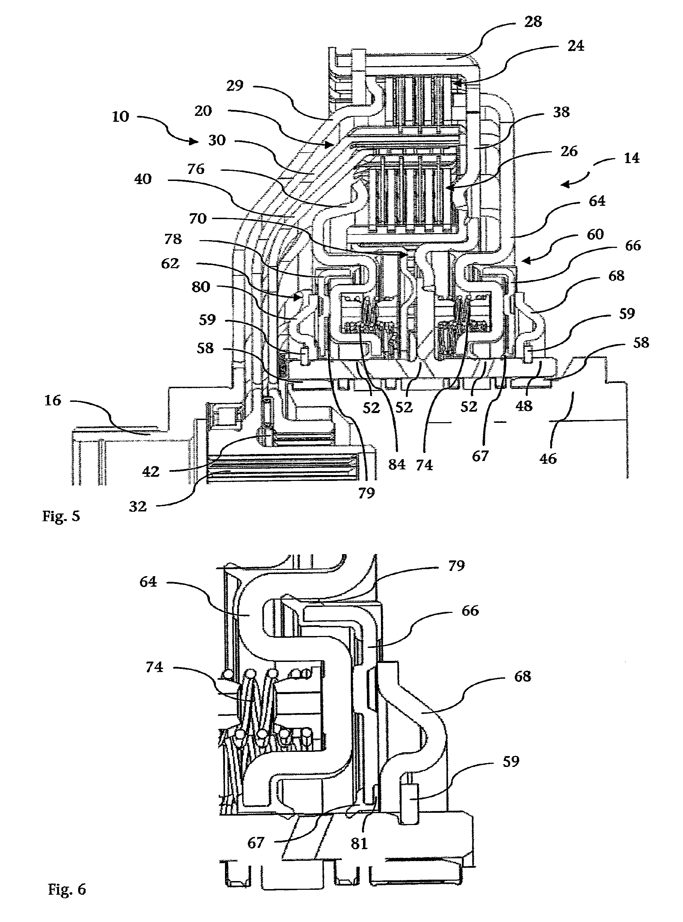

Die Wölbung kann herstellungstechnisch auf unterschiedliche Art und Weise realisiert sein. Vorzugsweise wird ein Halbzeug der Stütze 68, 80 in Form eines geraden Blechs umgebogen. So zeigt die erste Ausführungsform der Fig. 1 und 2 eine Stütze 68, 80, die im mittleren Bereich einen rechteckigen Blechbereich aufweist. Die zweite Ausführungsform der Fig. 3 und 4 zeigt eine Stütze 68, 80, die im mittleren Bereich einen kreisförmigen Blechbereich aufweist. Die dritte Ausführungsform der Fig. 5 und 6 zeigt eine Stütze 68, 80, die im mittleren Bereich einen dreieckigen Blechbereich aufweist. Vorzugsweise weist der mittlere Blechbereich ein oder mehrere gerade oder gebogene Blechteile auf, die durch Falten miteinander verbunden sind. Vorzugsweise ist der mittlere Bereich der Stütze 68, 80 durch Falten mit dem radial innen liegenden Bereich und mit dem radial außen liegenden Bereich verbunden. Vorzugsweise ist jede der Falten in einer weitgehend konstanten radialen Entfernung angeordnet.

Vorzugsweise stützt sich jede Stütze 68, 80 in einem radial innen liegenden Bereich auf einen Sicherungsring 59 ab. Der Sicherungsring 59 ist auf der vom Kolben 64, 76 abgewandten Seite an der Stütze 68, 80 angeordnet. Der Sicherungsring 59 ist vorzugsweise aus Metallblech von mehreren mm Dicke in axialer Richtung und 5 mm bis 2 cm Länge in radialer Richtung gefertigt. Der Sicherungsring 59 weit weitgehend die radiale Ausdehnung des radial innen liegenden Bereichs auf. Der Sicherungsring 59 ist in einer entsprechenden Nut im Nabenmantel 48 gehalten. Somit fließt beim Anpressen eines Kolbens 64, 76 eine Reaktionskraft vom dazugehörigen Zylinder 66, 78 im radial außen liegenden Bereich in die Stütze 68, 80 und von der Stütze 68, 80 fließt die Reaktionskraft im radial innen liegenden Bereich in den Sicherungsring 59. Bei Kenntnis der vorliegenden Erfindung kann der Fachmann natürlich auch Sicherungsringe mit größeren Dicken von 1 cm sowie größeren Längen von 3 cm oder 5 cm realisieren. Auch hier gilt, dass solche größere Dicken oder Längen mehr Bauraum benötigen.

Wie in den Ausführungsformen gemäß der Fig. 1 bis 6 dargestellt, ist jeder Zylinder 66, 78 bereichsweise mit Dichtungsmaterial 67, 79 versehen, um einen von einem Kolben 64, 76 und dem dazugehörigen Zylinder 66, 78 gebildeten Kolbenraum druckdicht zu umschließen, das Dichtungsmaterial 67, 79 des Zylinders 66, 78 ist von der Stütze 68, 80 beabstandet. Vorzugsweise ist das Dichtungsmaterial 67, 79 in einem radial außen liegenden Endbereich des Zylinders 66, 78 und einem radial innen liegenden Endbereich des Zylinders 66, 78 angeordnet. Vorzugsweise ist das Dichtungsmaterial 67, 79 an die Endbereiche des Zylinders 66, 78 angespritzt. Während sich der radial außen liegende Endbereich des Zylinders 66, 78 radial außerhalb der Stütze 68, 80 erstreckt und somit von der Stütze 68, 80 beanstandet ist, ist der radial innen liegende Endbereich des Zylinders 66, 78 durch den Abstand 81 zwischen Kolben 64, 76 und Stütze 68, 80 von der Stütze 68, 80 beanstandet. Bei Kenntnis der vorliegenden Erfindung kann der Fachmann natürlich auch ringförmiges Dichtungsmaterial wie O-Ringe verwenden, das in entsprechende Nuten gefasst ist.

Während in Fig. 1 bis 6 die Reibkupplungen 24, 26 als nasslaufende Lamellenkupplungen dargestellt sind, versteht es sich, dass der Aufbau der erfindungsgemäßen Doppelkupplungsanordnung 20 auch für trockenlaufende Reibkupplungen verwendbar ist. In diesem Fall könnte beispielsweise über Kanäle, die bei nasslaufenden Kupplungen zur Kühlölzufuhr verwendet werden, Kühlluft zugeführt werden.

Insgesamt lässt sich somit ein modulares System von Doppelkupplungsanordnungen aufbauen, die mit nasslaufenden oder trockenlaufenden Reibkupplungen ausgestattet sind. Der grundlegende Aufbau kann dabei für die eine wie die andere Variante verwendet werden.

Es versteht sich, dass die Doppelkupplungsanordnung 20 der Fig. 1 bis 6 auch mit gehäusefesten Kolben/Zylinderanordnungen 60, 62 gebaut werden könnte. Die Kolben/Zylinderanordnungen 60, 62 würden dann direkt auf der Nabe 46 montiert werden, wobei dann zusätzliche Radiallager im Bereich des Drehglieds 70 erforderlich sein können, wie es in der Schrift DE102006010113B4 gezeigt ist, auf die hinsichtlich des Aufbaus einer Doppelkupplungsanordnung mit drehfesten Kolben/Zylinderanordnungen Bezug genommen wird.

### Bezugszeichenliste

- 10: Antriebsstrang
- 14: Doppelkupplungsgetriebe
- 16: Eingangswelle
- 20: Doppelkupplungsanordnung
- 24: erste Reibkupplung
- 26: zweite Reibkupplung
- 28: erstes Eingangsglied
- 29: Mitnehmerscheibe
- 30: erstes Ausgangsglied
- 32: erste Ausgangswelle
- 38: zweites Eingangsglied
- 40: zweites Ausgangsglied
- 42: zweite Ausgangswelle
- 46: Nabe
- 48: Nabenmantel
- 52: Öffnungen
- 58: Radiallager
- 59: Sicherheitsring
- 60: erste Kolben/Zylinderanordnung
- 62: zweite Kolben/Zylinderanordnung
- 64: erster Kolben
- 66: erster Zylinder
- 67: Dichtungsmaterial des ersten Zylinders
- 68: erste Stütze
- 70: Drehglied
- 74: erste Federanordnung
- 76: zweiter Kolben
- 78: zweiter Zylinder
- 79: Dichtungsmaterial des zweiten Zylinders
- 80: zweite Stütze
- 81: Abstand
- 84: zweite Federanordnung

## Patentansprüche

1. Doppelkupplungsanordnung (20) für ein Doppelkupplungsgetriebe (14), mit einer Eingangswelle (16), einer ersten Reibkupplung (24), einer zweiten Reibkupplung (26), einer ersten Ausgangswelle (32), einer zweiten Ausgangswelle (42), einer ersten Kolben/Zylinderanordnung (60) und einer zweiten Kolben/Zylinderanordnung (62); wobei Eingangsglieder (28, 38) der Reibkupplungen (24, 26) mit der Eingangswelle (16) verbunden sind; wobei Ausgangsglieder (30, 40) der Reibkupplungen (24, 26) jeweils mit einer der beiden Ausgangswellen (32, 42) verbunden sind; wobei die Reibkupplungen (24, 26) jeweils mittels einer der Kolben/Zylinderanordnungen (60, 62) betätigbar sind; und wobei jede Kolben/Zylinderanordnung (60, 62) einen Kolben (64, 76) aufweist, der axial verschieblich in Bezug auf einen dazugehörigen Zylinder (66, 78) gelagert ist; wobei sich jeder Zylinder (66, 78) auf der vom Kolben (64, 76) abgewandten Seite in einem radial außen liegenden Bereich auf eine Stütze (68, 80) abstützt; und dass jeder Zylinder (66, 78) auf der vom Kolben (64, 76) abgewandten Seite in einem radial innen liegenden Bereich von der Stütze (68, 80) beabstandet ist, **dadurch gekennzeichnet, dass** jede Stütze (68, 80) in ihrer axialen Ausrichtung vom dazugehörigen Zylinder (66, 78) zumindest bereichsweise weg gewölbt ist.

2. Doppelkupplungsanordnung (20) nach Anspruch 1, **dadurch gekennzeichnet, dass** ein Abstand (81) zwischen Kolben (64, 76) und Stütze (68, 80) im radial innen liegenden Bereich der Stütze (68, 80) in der Größenordnung von 0,05 mm bis 0,5 mm liegt.

3. Doppelkupplungsanordnung (20) nach Anspruch 1 oder 2, **dadurch gekennzeichnet, dass** die Stütze (68, 80) in einem mittleren Bereich vom dazugehörigen Zylinder (66, 76) axial weg gewölbt ist; und dass die Stütze (68, 80) im radial innen liegenden Bereich und im radial außen liegenden Bereich radial ausgerichtet ist.

4. Doppelkupplungsanordnung (20) nach einem der Ansprüche 1 bis 3, **dadurch gekennzeichnet, dass** die Stütze (68, 80) im mittleren Bereich einen insbesondere im Längsschnitt rechteckigen Blechbereich aufweist.

5. Doppelkupplungsanordnung (20) nach einem der Ansprüche 1 bis 3, **dadurch gekennzeichnet, dass** die Stütze (68, 80) im mittleren Bereich einen insbesondere im Längsschnitt kreisförmigen Blechbereich aufweist.

6. Doppelkupplungsanordnung (20) nach einem der Ansprüche 1 bis 3, **dadurch gekennzeichnet, dass** die Stütze (68, 80) im mittleren Bereich einen insbesondere im Längsschnitt dreieckigen Blechbereich aufweist.

7. Doppelkupplungsanordnung (20) nach einem der Ansprüche 1 bis 6, **dadurch gekennzeichnet, dass** sich jede Stütze (68, 80) in einem radial innen liegenden Bereich auf einen Sicherungsring (59) abstützt.

8. Doppelkupplungsanordnung (20) nach Anspruch 7, **dadurch gekennzeichnet, dass** der Sicherungsring (59) auf der vom Kolben (64, 76) abgewandten Seite an der Stütze (68, 80) angeordnet ist.

9. Doppelkupplungsanordnung (20) nach Anspruch 8, **dadurch gekennzeichnet, dass** beim Anpressen eines Kolbens (64, 76) eine Reaktionskraft vom dazugehörigen Zylinder (66, 78) im radial außen liegenden Bereich in die Stütze (68, 80) fließt; und dass die Reaktionskraft von der Stütze (68, 80) im radial innen liegenden Bereich in den Sicherungsring (59) fließt.

10. Doppelkupplungsanordnung (20) nach einem der Ansprüche 1 bis 9, **dadurch gekennzeichnet, dass** jeder Zylinder (66, 78) bereichsweise mit Dichtungsmaterial (67, 79) versehen ist, um einen von einem Kolben (64, 76) und dem dazugehörigen Zylinder (66, 78) gebildeten Kolbenraum druckdicht zu umschließen; und dass das Dichtungsmaterial (67, 79) des Zylinders (66, 78) von der Stütze (68, 80) beabstandet ist.

## Claims

1. A dual-clutch assembly (20) for a dual-clutch transmission (14), having an input shaft (16), a first friction clutch (24), a second friction clutch (26), a first output shaft (32), a second output shaft (42), a first piston/cylinder assembly (60), and a second piston/cylinder assembly (62); wherein input elements (28, 38) of the friction clutches (24, 26) are connected to the input shaft (16); wherein output elements (30, 40) of the friction clutches (24, 26) are each connected to one of the two output shafts (32, 42); wherein the friction clutches (24, 26) can each be actuated by means of one of the piston/cylinder assemblies (60, 62); and wherein each piston/cylinder assembly (60, 62) has a piston (64, 76), which is supported so as to be axially movable in relation to an associated cylinder (66, 78); wherein each cylinder (66, 78) is supported on a support (68, 80) on the side facing away from the piston (64, 76) in a region lying radially outside; and wherein each cylinder (66, 78) is spaced apart from the support (68, 80) on the side facing away from the piston (64, 76) in a region lying radially inside, **characterized in that** each support (68, 80) is arched away from the associated cylinder (66, 78) along the axial alignment of said support, at least in some region or regions.

2. The dual-clutch assembly (20) as claimed in claim 1, **characterized in that** a spacing (81) between the pistons (64, 76) and the support (68, 80) in the radially inner region of the support (68, 80) is of the order of 0.05 mm to 0.5 mm.

3. The dual-clutch assembly (20) as claimed in claim 1 or 2, **characterized in that** the support (68, 80) is arched axially away from the associated cylinder (66, 76) in a central region; and **in that** the support (68, 80) is aligned radially in the radially inner region and in the radially outer region.

4. The dual-clutch assembly (20) as claimed in one of claims 1 to 3, **characterized in that**, in the central region, the support (68, 80) has a sheet region which is rectangular, particularly in longitudinal section.

5. The dual-clutch assembly (20) as claimed in one of claims 1 to 3, **characterized in that**, in the central region, the support (68, 80) has a sheet region which is circular, particularly in longitudinal section.

6. The dual-clutch assembly (20) as claimed in one of claims 1 to 3, **characterized in that**, in the central region, the support (68, 80) has a sheet region which is triangular, particularly in longitudinal section.

7. The dual-clutch assembly (20) as claimed in one of claims 1 to 6, **characterized in that** each support (68, 80) is supported in a radially inner region on a retaining ring (59).

8. The dual-clutch assembly (20) as claimed in claim 7, **characterized in that** the retaining ring (59) is arranged on the side of the support (68, 80) which faces away from the piston (64, 76).

9. The dual-clutch assembly (20) as claimed in claim 8, **characterized in that**, when there is contact pressure from a piston (64, 76), a reaction force flows from the associated cylinder (66, 78) into the support (68, 80) in the radially outer region; and **in that** the reaction force flows from the support (68, 80) into the retaining ring (59) in the radially inner region.

10. The dual-clutch assembly (20) as claimed in one of claims 1 to 9, **characterized in that** each cylinder (66, 78) is provided in some region or regions with sealing material (67, 79) in order to leaktightly surround a piston chamber formed by a piston (64, 76) and the associated cylinder (66, 78); and **in that** the sealing material (67, 79) of the cylinder (66, 78) is spaced apart from the support (68, 80).

## Revendications

1. Dispositif à double embrayage (20) pour une transmission à double embrayage (14), comprenant un arbre d'entrée (16), un premier embrayage à friction (24), un deuxième embrayage à friction (26), un premier arbre de sortie (32), un deuxième arbre de sortie (42), un premier agencement piston/cylindre (60) et un deuxième agencement piston/cylindre (62) ; des organes d'entrée (28, 38) des embrayages à friction (24, 26) étant connectés à l'arbre d'entrée (16) ; des organes de sortie (30, 40) des embrayages à friction (24, 26) étant à chaque fois connectés à l'un des deux arbres de sortie (32, 42) ; les embrayages à friction (24, 26) pouvant à chaque fois être actionnés au moyen de l'un des agencements piston/cylindre (60, 62) ; et chaque agencement piston/cylindre (60, 62) présentant un piston (64, 76) qui est supporté de manière déplaçable axialement par rapport à un cylindre associé (66, 78) ; chaque cylindre (66, 78) s'appuyant sur le côté opposé au piston (64, 76) dans une région située radialement à l'extérieur sur un support (68, 80) ; et en ce que chaque cylindre (66, 78) est espacé du support (68, 80) du côté opposé au piston (64, 76) dans une région située radialement à l'intérieur, **caractérisé en ce que** chaque support (68, 80) est au moins en partie courbé dans son orientation axiale à l'écart du cylindre associé (66, 78).

2. Dispositif à double embrayage (20) selon la revendication 1, **caractérisé en ce qu'**une distance (81) entre le piston (64, 76) et le support (68, 80) dans la région du support (68, 80) située radialement à l'intérieur est de l'ordre de 0,05 mm à 0,5 mm.

3. Dispositif à double embrayage (20) selon la revendication 1 ou 2, **caractérisé en ce que** le support (68, 80) est courbé axialement dans une région centrale à l'écart du cylindre associé (66, 76) ; et **en ce que** le support (68, 80) est orienté radialement dans la région située radialement l'intérieur et dans la région située radialement à l'extérieur.

4. Dispositif à double embrayage (20) selon l'une quelconque des revendications 1 à 3, **caractérisé en ce que** le support (68, 80) présente, dans la région centrale, une région de tôle de forme rectangulaire notamment en coupe longitudinale.

5. Dispositif à double embrayage (20) selon l'une quelconque des revendications 1 à 3, **caractérisé en ce que** le support (68, 80) présente, dans la région centrale, une région de tôle de forme circulaire notamment en coupe longitudinale.

6. Dispositif à double embrayage (20) selon l'une quelconque des revendications 1 à 3, **caractérisé en ce que** le support (68, 80) présente, dans la région centrale, une région de tôle de forme triangulaire notamment en coupe longitudinale.

7. Dispositif à double embrayage (20) selon l'une quelconque des revendications 1 à 6, **caractérisé en ce que** chaque support (68, 80) s'appuie dans une région située radialement à l'intérieur sur une bague de fixation (59).

8. Dispositif à double embrayage (20) selon la revendication 7, **caractérisé en ce que** la bague de fixation (59) est disposée sur le côté opposé au piston (64, 76) contre le support (68, 80).

9. Dispositif à double embrayage (20) selon la revendication 8, **caractérisé en ce que** lors du pressage d'un piston (64, 76), une force réactionnelle du cylindre associé (66, 78) est transmise au support (68, 80) dans la région située radialement à l'extérieur ; et **en ce que** la force réactionnelle est transmise depuis le support (68, 80) dans la bague de fixation (59) dans la région située radialement à l'intérieur.

10. Dispositif à double embrayage (20) selon l'une quelconque des revendications 1 à 9, **caractérisé en ce que** chaque cylindre (68, 78) est pourvu en partie d'un matériau d'étanchéité (67, 79) afin d'entourer de manière étanche à la pression un espace de piston formé par un piston (64, 76) et le cylindre associé (66, 78) ; et **en ce que** le matériau d'étanchéité (67, 79) du cylindre (66, 78) est espacé du support (68, 80).
